# EUROPÄISCHE PATENTSCHRIFT

(11) **EP 2 313 332 B1**
(45) Veröffentlichungstag und Bekanntmachung des Hinweises auf die Patenterteilung: **07.05.2014**
(21) Anmeldenummer: 09765660.7
(22) Anmeldetag: 17.04.2009
(51) Int. Cl.: B65G 47/08

(54) **VORRICHTUNG UND VERFAHREN ZUM ZUSAMMENSTELLEN VON GEBINDEN FÜR EINE VERPACKUNGSMASCHINE**
DEVICE AND METHOD FOR COMPOSING PACKAGES FOR A PACKAGING MACHINE
DISPOSITIF ET PROCEDE POUR LE REGROUPEMENT DE LOTS POUR UNE MACHINE D'EMBALLAGE

(30) Priorität: 20.06.2008 DE 102008029497
(43) Veröffentlichungstag der Anmeldung: 27.04.2011
(73) Patentinhaber: Krones AG, 93073 Neutraubling (DE)
(72) Erfinder: ESCHLBECK, Richard, 83569 Vogtareuth (DE); KOLLMUSS, Manuel, 83083 Riedering (DE); HUBER, Wolfgang, 85567 Grafing (DE); KLENK, Christoph, 93173 Wenzenbach (DE)
(74) Vertreter: Reichert, Werner Franz
(86) Internationale Anmeldenummer: PCT/EP2009/054608
(87) Internationale Veröffentlichungsnummer: WO 2009/153080

(56) Entgegenhaltungen:
- DE-A1- 2 408 158
- DE-A1- 19 752 908

## Beschreibung

Die vorliegende Erfindung betrifft eine Vorrichtung zum geordneten Zusammenstellen von Artikeln. Im Besonderen umfasst die Vorrichtung zum geordneten Zusammenstellen von Artikeln mindestens ein Einlaufband für lose, ungruppierte Artikel, mindestens eine Gruppiereinrichtung für die losen, ungruppierten Artikel, die durch die mindestens eine Gruppiereinrichtung umsetzbar sind, und ein Handhabungssystem oder mindestens einen Roboter mit jeweils einem Zugriffbereich. Ein Auslaufband ist der mindestens einen Gruppiereinrichtung zugeordnet, das die auf dem Auslaufband behälterlos gruppierten Artikel einer Verpackungseinrichtung zuführt.

Ferner betrifft die Erfindung ein Verfahren zum geordneten Zusammenstellen von Artikeln.

Die deutsche Offenlegungsschrift DE 42 08 818 A1 offenbart ein Verfahren und eine Vorrichtung zum Einlegen von Artikeln in Verpackungseinsätze. Die Artikel werden auf einem Zuführband herangebracht und deren Position wird mittels eines Bildverarbeitungssystems ermittelt. Eine vom Rechner gesteuerte Saug- und/oder Greifeinrichtung nimmt den erkannten Artikel auf und verfährt ihn zu einer bestimmten Ablageposition auf einem Transportband. Um die Einleggeschwindigkeit der Artikel in die Behälter zu erhöhen, ist mindestens eine zweite Saug- und/oder Greifeinrichtung vorgesehen. Die zu platzierenden Artikel müssen auf dem Transportband in geordneter Position jedoch in Fächer der Behälter abgelegt werden.

Die deutsche Auslegeschrift 1066478 offenbart eine Maschine zum Einbringen von Behältern in einem gemeinsamen Verpackungsbehälter. Zum Aufnehmen der Behälter beim Zusammenstellen der jeweiligen Behältergruppe ist eine bis zum Rand der Ladeöffnung reichende feste Plattform vorgesehen. Die Ladeöffnung besteht aus mehreren, im Querabstand voneinander angeordneten Latten. Die hin und her bewegliche Überladeplattform umfasst mehrere, zwischen den Latten der festen Plattform angeordnete, lang gestreckte Tragfinger, die aus dem Vorschubkopf der Vorschubeinrichtung im Abstand nebeneinander angebracht sind und mittels dieser in einer etwas unter der Oberfläche der festen Plattform liegenden Ebene zwischen einer zurückgezogenen Stellung, in der sie sich innerhalb der festen Plattform befinden, und einer vorgeschobenen Stellung, in der sie sich über die Enden der die feste Plattform bildenden Latten hinaus bis über die Ladeöffnung hervorragen, bewegbar sind. Diese Vorrichtung ist jedoch sehr stark auf die Größe der zu erstellenden Gruppen ausgerichtet. Eine Variabilität ist in dieser Vorrichtung nicht möglich.

Die europäische Patentschrift 0162933 offenbart ein Verfahren und eine Vorrichtung zum geordneten Einlegen von Gegenständen, insbesondere Pralinen, in Aufnahmebehälter. Es sind mehrere Zulieferbänder vorgesehen, von denen jedes einen anderen Artikeltyp transportiert. Die Behälter, in denen die Artikel abgelegt werden sollen, laufen derart an den Transportbändern vorbei, dass die Artikel in die entsprechend dafür vorgesehenen Fächer in den Behälter abgelegt werden. Eine variable Ablegung bzw. eine variable Gruppierung der Artikel ist mit dieser Vorrichtung ebenfalls nicht möglich. Werden andere Behälter verwendet, so muss die Vorrichtung in entsprechender Weise mechanisch bzw. softwaremäßig umgerüstet werden.

Die deutsche Gebrauchsmusterschrift DE 29807979 U1 offenbart eine Vorrichtung zum Gruppieren oder Vereinzeln von Artikeln. Die Artikel werden in einer oder mehreren geschlossenen Reihen auf einem Förderband oder dergleichen transportiert. Zum Weiterbehandeln werden die Artikel einzeln oder gruppenweise auseinander gezogen. Hierzu sind in Transportrichtung vor- und zurück verfahrbare Elemente vorhanden, die mit den Artikeln gesteuert in oder außer Eingriff bringbar sind. So können, je nach Bedarf, die einzelnen Artikel für den Weitertransport, wie z. B. zu einer Verpackungsmaschine, gruppiert oder vereinzelt werden.

Diese Vorrichtung ist jedoch ebenfalls nur für die Verarbeitung eines Artikeltyps geeignet. Sollen mehrere Artikeltypen bzw. unterschiedliche Größen von Artikeln verarbeitet werden, so muss die Maschine jeweils umgerüstet werden. Dies erhöht logischerweise die Stillstandzeit einer nachgeordneten Verpackungsmaschine.

Die deutsche Offenlegungsschrift DE 4207725 offenbart ein Verfahren und eine Vorrichtung zum Verpacken von Gegenständen in einem kontinuierlich ablaufenden Prozess. Zum Verpacken werden dabei die Gegenstände in Gruppen unterteilt. Jede dieser Gruppen wird durch das Verpacken zu einer Verpackungseinheit zusammengefasst. Während des gesamten Verpackungsvorgangs wird jede Gruppe zumindest in Laufrichtung vorne und hinten abgestützt. Diese Vorrichtung ist ebenfalls nicht variabel und kann somit nie ohne Umschichten unterschiedliche Artikelgruppen verarbeiten.

Die europäische Patentschrift EP 0856465 B1 offenbart eine Vorrichtung und ein Verfahren zum Einlegen von Artikeln in Behälter. Die Einzelprodukte werden ungeordnet auf einem Zuführband herangeführt. Im Gegenstrom zum Zuführband verlaufen die Behälter ebenfalls auf mindestens einem Transportband. Ferner sind Greifvorrichtungen vorgesehen, die die ungeordneten Artikel vom Zuführband ergreifen und in die entsprechenden Behälter in die dafür vorgesehenen Fächer einsetzen.

Die deutsche Patentschrift DE 4243010 C1 offenbart eine Packmaschine. Mit der Packmaschine ist das Ein- oder Auspacken von Artikeln in oder aus Gebinden möglich. Die Packmaschine ist mit mindestens einem kontinuierlich auf einer geschlossenen Bahn umlaufenden, steuerbaren Greifelement versehen. Das Greifelement weist einen Packkopf auf, der das Gebinde erfasst und entsprechend umsetzt. Der Packmaschine werden leere Gebinde zum Einpacken von Artikeln und gleichzeitig mit Artikeln gefüllte Gebinde zum Auspacken zugeführt, wobei während eines vollständigen Umlaufes des Packkopfes die Artikel aus einem zulaufenden Gebinde entnommen, auf den Artikelförderer abgesetzt und der Packmaschine zugeführte Artikel durch den Packkopf in leer zugeführte Gebinde eingesetzt werden. Die Vorrichtung ist ebenfalls nicht ohne ein Umrüsten variabel einsetzbar.

Die deutsche Patentanmeldung DE 197 52 908 A1 offenbart eine Vorrichtung zum geordneten Zusammenstellen von Artikeln (Objekten, Würsten) mit mindestens einem Einlaufband (Zuführband) für lose, ungruppierte Artikel und mindestens einer Gruppiereinrichtung (erste Handhabungseinrichtung) für die losen, ungruppierten Artikel. Ein Auslaufband (Förderband) ist der Gruppiereinrichtung zugeordnet und führt anschließend die auf dem Auslaufband behälterlos gruppierten Artikel einer Verpackungsmaschine zu.

Die deutsche Patentanmeldung DE 24 08 158 A1 offenbart eine Vorrichtung zum geordneten Zusammenstellen von Artikeln (Gegenständen) mit mindestens einem Einlaufband (erste Förderbahn) für lose, ungruppierte Artikel. Die Gruppierung der Artikel erfolgt bereits auf der Förderbahn sowie weiter auf einer sich daran anschließenden Fläche. Ein Auslaufband ist der Fläche zugeordnet und führt anschließend die auf dem Auslaufband behälterlos gruppierten Artikel einer Verpackungsmaschine zu.

Der Erfindung liegt die Aufgabe zugrunde, eine Vorrichtung zum geordneten Zusammenstellen von Gebinden für eine Verpackungsmaschine zu schaffen, mit der störungsfrei, positionsgenau und effizient eine Vielzahl von Artikeltypen für die Verpackung vorbereitet werden können, wobei Umrüstzeiten für die Verarbeitung von unterschiedlichen Artikeltypen vermieden werden und ein geringer Bauraum (kompakt) benötigt wird.

Diese Aufgabe wird gelöst durch eine Vorrichtung, die die Merkmale des Anspruchs 1 umfasst.

Eine weitere Aufgabe der Erfindung ist, ein Verfahren zu schaffen, mit dem das geordnete Zusammenstellen von Artikeln möglich ist, wobei mit dem Verfahren unterschiedliche Artikeltypen und Größen verarbeitet werden können, ohne dass es zu Stillstandzeiten aufgrund von Umrüstungen kommt. Ferner soll das erfindungsgemäße Verfahren einen reibungslosen Verarbeitungsprozess der einzelnen Artikel ermöglichen.

Diese Aufgabe wird gelöst durch ein Verfahren mit den Merkmalen des Anspruchs 13.

Die erfindungsgemäße Vorrichtung hat den Vorteil, dass sie die Nachteile der bisher im Markt befindlichen Verpackungsmaschinen vermeidet. Diese Verpackungsmaschinen besitzen eine Produktzufuhreinheit, welche bekannter Weise die Produkte, wie z. B. Flaschen, Dosen, Kaffeepäckchen, Zuckerpäckchen, Weichpackungen oder ähnliche geeignete Gebinde in Massenstrom anliefert. Die Produkte werden dann vor der Verpackungsmaschine mittels Führungsfläche gezwungen, sich in einzelne Bahnen aufzureihen, um die Produkte gassengeführt der Verpackungsmaschine zuzuführen. Die in den einzelnen Gassen geführten Produkte werden dann in der Verpackungsmaschine auf ein bestimmtes Format in Laufrichtung durch die Maschine eingeteilt. Dies geschieht üblicherweise innerhalb der Verpackungsmaschine mit Hilfe eines sog. Behältereinteilers, welcher mittels von unten auftauchender Finger die Produkte voneinander abtrennt und somit einzelne Gebindeformationen, wie z. B. sechs Flaschen, formt. Die abgetrennten Produktformationen werden dann mittels einzelner Transportspuren und einem motorisch angetriebenen Transporthilfsmittel weiter durch die Maschine transportiert und ggf. mit einer Folie eingeschlagen. Ebenfalls können in der Verpackungsmaschine auch andere Verpackungsartikel, wie z. B. Kartonagen oder auch anderes geeignetes Material zugeführt werden.

Wie bereits oben erwähnt, erfordern diese Verpackungsmaschinen bei der Verpackung von anderen Gegenständen eine entsprechende Umrüstzeit, um die Maschinen an die andere Größe der zu verpackenden Gegenstände anzupassen. Ebenfalls ist es mit den Verpackungsmaschinen nur möglich, sortenreine, d. h. gleiche Artikel, Produkte zu verarbeiten.

Die gegenwärtige Erfindung ist von Vorteil, da auf mindestens einem Einlaufband lose, ungruppierte Artikel einlaufen und mindestens eine Gruppiereinrichtung vorgesehen ist, die diese losen und ungruppierten Artikel in entsprechender Weise auf einem Auslaufband gruppiert. Die auf dem Auslaufband behälterlos gruppierten Artikel werden durch das Auslaufband einer Verpackungseinrichtung zugeführt. In der Verpackungseinrichtung werden diese gruppierten Artikel letztendlich zu Gebinden zusammengefasst. Aus dem Stand der Technik ist eine Vielzahl von Möglichkeiten bekannt, wie gruppierte Artikel zu Gebinden zusammengefasst werden können. Dies kann z. B. alleine mit einer Folie geschehen. Ebenso ist es möglich, dass die Artikel auf einer Unterlage abgelegt oder abgesetzt werden, welche auch dann Bestandteil des fertigen Gebindes ist, das die Verpackungsmaschine verlässt. Es können nicht nur Unterlagen sein, sondern auch Trays die in der Verpackungsmaschine aufgefaltet werden. Die Unterlagen können ein Zuschnitt aus Karton oder Kunststoff sein. In der Verpackungsmaschine werden aus den flachen Zuschnitten Wraparoundverpackungen mir den auf den flachen Unterlagen gruppierten Artikeln hergestellt. In der Verpackungsmaschine werden die flachen Unterlagen zu einem geschlossenen Behältnis gefaltet und verleimt.

Gemäß der Erfindung besitzt das Einlaufband und das Auslaufband eine gleichgerichtete Transportrichtung. Ebenso ist es denkbar, dass das Einlaufband bzgl. des Auslaufbands unter einem Winkel angeordnet ist. Besonders von Vorteil ist es, wenn das Einlaufband unter einem rechten Winkel zum Auslaufband angeordnet ist.

Ebenso ist es denkbar, dass das Einlaufband die losen, ungruppierten Artikel der Gruppiereinrichtung ungeordnet in mindestens einer Gasse zuführt. Letztendlich ist es von Bedeutung, dass das Einlaufband die losen, ungruppierten Artikel der Gruppiereinrichtung ungeordnet zuführt. Da keine Führungselemente im Einlaufband vorgesehen sind, ist es möglich, dass ohne eine Umstellung der Vorrichtung schnell andere Artikeltypen bzw. Artikelgrößen verarbeitet werden können.

In einer vorteilhaften Ausgestaltung ist die Vorrichtung mit einem Rücklauf versehen. Der Rücklauf dient dazu, Artikel, die nicht von der Gruppiereinrichtung auf das Auslaufband umgesetzt worden sind, wieder dem Einlaufband zuzuführen. Die Zuführung zum Einlaufband geschieht mit dem Rücklauf vor der Gruppiereinrichtung bzw. vor den Gruppiereinrichtungen, die für das Umsetzen bzw. Gruppieren der Artikel auf dem Auslaufband verantwortlich sind.

Erfindungsgemäß ist der Vorrichtung ein Magazin für Unterlagen zugeordnet. Mit einem Handhabungssystem oder mindestens einem Roboter wird mindestens eine Unterlage aus dem Magazin entnommen und auf dem Auslaufband abgesetzt. Das Handhabungssystem kann z.B. als weitere Gruppiereinrichtung ausgestaltet sein. Mit der Gruppiereinrichtung oder dem mindestens einen Roboter werden letztendlich die Artikel auf der Unterlage gruppiert. Die Gruppiereinrichtungen können als Portalroboter, der über Linearführungen bewegt wird, oder als freistehender Roboter ausgebildet werden.

Ist die Gruppiereinrichtung als ein Roboter ausgebildet, sind das Auslaufband und das Einlaufband im Arbeitsbereich des mindestens einen Roboters angeordnet. Es ist selbstverständlich, dass je nach Geschwindigkeit des Einlaufbandes, bzw. der Anzahl der einlaufenden Artikel mehrere Gruppiereinrichtungen, bzw. Roboter vorgesehen sein können, damit die Umsetzung und Gruppierung der Artikel auf dem Auslaufband derart erfolgen kann, dass es zu keinem Stau der Artikel im Einlaufband kommt. Wenn für die Gruppierung der Artikel auf dem Auslaufband ebenfalls Unterlagen verwendet werden sollen, ist es vorteilhaft, ebenfalls im Arbeitsbereich des Roboters ein Magazin für diese Unterlagen vorzusehen.

Das erfindungsgemäße Verfahren zum geordneten Zusammenstellen von Artikeln ist von Vorteil, da lose, ungruppierte Artikel mit mindestens einem Auslaufband mindestens einer Gruppiereinrichtung zugeführt werden. Die Gruppiereinrichtung setzt die Artikel nacheinander in mehreren behälterlosen Gruppen auf einem Auslaufband ab. Über das Auslaufband werden die behälterlos gruppierten Artikel einer Verpackungseinrichtung zugeführt.

Mit der erfindungsgemäßen Vorrichtung, bzw. mit dem erfindungsgemäßen Verfahren werden Gebinde aus mehreren Artikeln hergestellt. Hierzu werden die behälterlos und geordnet zusammengestellten Artikel einer Verpackungseinrichtung zugeführt, die aus den behälterlos und geordnet zusammengestellten Artikeln das Gebinde produziert. Unter einem Gebinde wird eine feste Verbindung aus mindestens zwei Artikeln verstanden. Die feste Verbindung wird z. B. durch Umhüllung der mehreren Artikeln mit einer Folie erreicht. Andere bekannte Verfahren sind hinlänglich aus dem Stand der Technik bekannt.

Das erfindungsgemäße Verfahren und die erfindungsgemäße Vorrichtung sind äußerst variabel, so dass man z. B. auch Gebinde aus mindestens zwei unterschiedlichen

Artikeltypen herstellen kann. Selbstverständlich ist es auch möglich, dass alle Artikel eines Gebindes aus gleichen Artikeln bestehen. Es können somit auch jederzeit nicht nur sortenreine Artikel verarbeitet werden.

Merkmale vorteilhafter Weiterbildungen der Erfindung ergeben sich aus den jeweiligen abhängigen Ansprüchen.

Im Folgenden sollen Ausführungsbeispiele die erfindungsgemäße Vorrichtung, das erfindungsgemäße Verfahren und deren Vorteile anhand der beigefügten Figuren näher erläutern.
Figur 1 zeigt eine Ausführungsform der Vorrichtung zum geordneten Zusammenstellen von Artikeln.
Figur 2 zeigt die Ausführungsform der Vorrichtung zum geordneten Zusammenstellen von Artikeln, wie sie bereits in Figur 1 dargestellt ist, wobei hier die Artikel anders gruppiert werden.
Figur 3 zeigt eine weitere Möglichkeit der Gruppierung der Artikel auf einem Auslaufband.
Figur 4 zeigt eine weitere Ausführungsform der Vorrichtung zum geordneten Zusammenstellen von Artikeln, wobei die losen und ungruppierten Artikel auf zwei Einlaufbändern angeliefert werden.
Figur 5 zeigt eine weitere Ausführungsform der Vorrichtung zum geordneten Zusammenstellen von Artikeln, wobei das Einlaufband senkrecht zum Auslaufband angeordnet ist.
Figur 6 zeigt eine weitere, beanspruchte Ausführungsform der Vorrichtung zum geordneten Zusammenstellen von Artikeln, wobei die Artikel auf dem Auslaufband auf einer Unterlage abgestellt werden.
Figur 7 zeigt eine Ausführungsform, bei der die Artikel auf dem Einlaufband in geordneten Gassen angeliefert werden und auf dem Auslaufband in bestimmte Lagen gruppiert werden.
Figur 8 zeigt eine Ausführungsform der erfindungsgemäßen Vorrichtung wie beansprucht bei der ein Roboter zwischen dem Einlaufband und dem Auslaufband vorgesehen ist.

Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich. sind. Die dargestellten Ausführungsformen stellen lediglich Beispiele dar, wie die erfindungsgemäße Vorrichtung oder das erfindungsgemäße Verfahren ausgestaltet sein können und stellen keine abschließende Begrenzung dar.

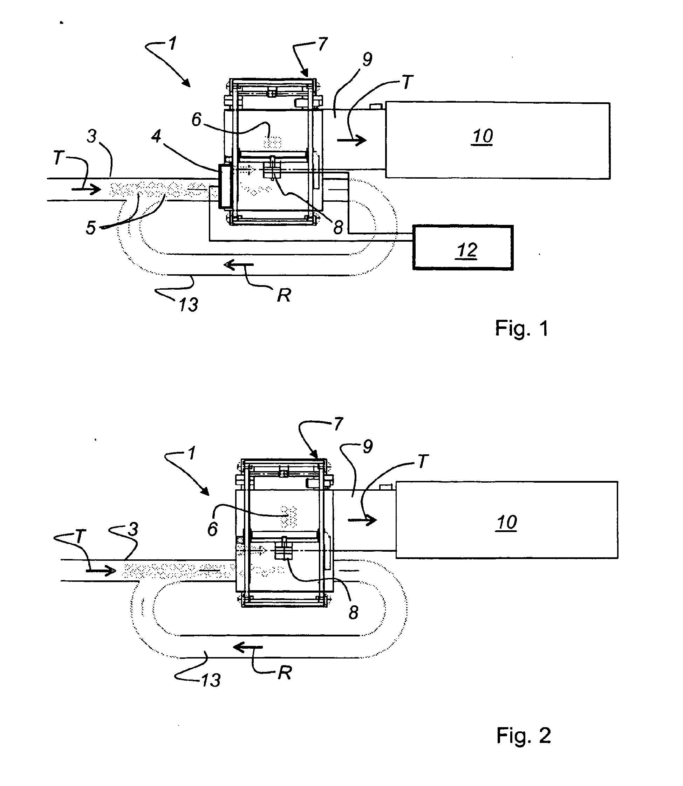

Die in Figur 1 dargestellte Ausführungsform der Vorrichtung 1 zum geordneten Zusammenstellen von Artikeln weist ein Einlaufband 3 auf, das entlang einer Transportrichtung T Artikel 5 ungeordnet zu einer Gruppiereinrichtung 7 transportiert. Die Gruppiereinrichtung 7 dient dazu, die auf dem Einlaufband 3 einlaufenden Artikel 5 zu ergreifen und auf ein entsprechendes Auslaufband 9 umzusetzen. Für den Fall, dass das Einlaufband 3 und das Auslaufband 9 auf einer Ebene liegen, ist das Umsetzen der Artikel auch als ein Überschieben der Artikel vom Einlaufband 3 auf das Auslaufband 9 zu verstehen. Das Auslaufband 9 bewegt sich ebenfalls in der gleichen Transportrichtung T wie das Einlaufband 3. Es ist selbstverständlich, dass die Greifeinrichtung 7 eine Bilderfassungseinrichtung oder Detektoreinrichtung 4 besitzt, mit der die Anzahl und der Ort der einlaufenden ungruppierten Artikel 5 auf dem Einlaufband 3 erfasst werden. Die Greifeinrichtung 7 besitzt einen Greifkopf 8, der mindestens einen Artikel 5 erfasst und diesen dann auf das Auslaufband 9 umsetzt. In der in Figur 1 dargestellten Ausführungsform werden die Artikel 5 derart auf dem Auslaufband 9 zusammengestellt, dass die gruppierten Artikel 6 eine Gruppe aus sechs Artikeln bilden. Mit dem Auslaufband 9 werden die Artikel einer Verpackungseinrichtung 10 zugeführt.

Obwohl der Ablauf der Verpackung der geordneten Artikel 6 auf dem Auslaufband 9, wie er in der Verpackungseinrichtung 10 abläuft, für die Erfindung nicht wesentlich ist, soll er dennoch aus Gründen der Vollständigkeit hier erläutert werden. Die auf dem Auslaufband 9 vorhandenen gruppierten Artikel 6 laufen nacheinander in die Verpackungseinrichtung 10 ein. Dort können sie wahlweise mit den verschiedenen Verpackungen zu festen Gebinden zusammengefasst werden. Die zu verpackenden Artikel können z. B. Kartonagen, Weichpackungen, Flaschen, Dosen oder dergleichen sein. Diese Artikel werden einzeln oder gruppenweise z. B. mit einem Schrumpffolienzuschnitt verpackt. Ebenso ist es möglich, dass die zu verpackenden Artikel geordnet auch auf einer Unterlage, wie z. B. einem Karton, abgestellt werden. In der Verpackungseinrichtung 10 werden die auf der Unterlage, wie z. B. Karton, befindlichen und angeordneten Artikel 6 zu einem festen Gebinde zusammengefasst, das letztendlich so in den Handel gelangen kann.

Die in Figur 1 gezeigte Ausführungsform der Vorrichtung zum geordneten Zusammenstellen von Artikeln, die lediglich eine Gruppiervorrichtung 7 dargestellt hat, soll nicht als eine Beschränkung der Erfindung aufgefasst werden. Es ist für einen Fachmann selbstverständlich, dass mehrere Gruppiereinrichtungen 7 in Reihe geschaltet werden können, um mit dem über das Einlaufband 3 einlaufenden Strom der ungruppierten Artikel 5 Schritt zu halten und diese in einer entsprechenden geordneten Art und Weise auf dem Auslaufband 9 abzustellen. Ebenso ist es möglich, das Einlaufband 3 mit einem Rücklauf 13 zu versehen. Über den Rücklauf 13 werden die mit dem Einlaufband 3 der Gruppiereinrichtung 7 zugeführten ungruppierten Artikel 5 wieder dem Einlaufband 3 zugeführt, wenn die Gruppiereinrichtung 7 nicht mit der Vielzahl der einlaufenden ungruppierten Artikel 5 Schritt halten kann. Die Rückführung 13 führt die Artikel 5 dem Einlaufband 3 vor der Gruppiereinrichtung 7 zu. Die Rückführung 13 besitzt eine Transportrichtung R, die im Wesentlichen der Transportrichtung T des Einlaufbandes 3 und des Auslaufbandes 9 entgegengerichtet ist.

Die Bilderfassungseinrichtung oder Detektoreinrichtung 4 ist mit einer Auswerte- und Steuereinrichtung 12 verbunden. Mit der Auswerte- und Steuereinrichtung 12 kann die Geschwindigkeit des Einlaufbandes 3 und des Auslaufbandes 9 geregelt werden. Ferner wird mit der Auswerte- und Steuereinrichtung 12 der Greifkopf 8 der Gruppiereinrichtung 7 gesteuert, um die Artikel auf dem Einlaufband 3 zu erfassen und diese an den dafür vorgesehenen Ort auf dem Auslaufband 9 abzusetzen. Die Gruppierung der Artikel auf dem Auslaufband 9 kann ebenfalls mit einer Bilderfassungseinrichtung oder Detektoreinrichtung (hier nicht dargestellt) überwacht werden.

Figur 2 zeigt eine weitere Möglichkeit, wie die behälterlos gruppierten Artikel 6 auf dem Auslaufband 9 angeordnet werden können. Im Gegensatz zu der in Figur 1 gezeigten Darstellung, ist die in Figur 2 gebildete Formation der behälterlos gruppierten Artikel 6 größer als in Figur 1. Dies soll lediglich verdeutlichen, dass je nach Programmierung der Gruppiervorrichtung, bzw. der Vorrichtung 1 zum geordneten Zusammenstellen von Artikeln beliebige Formen der behälterlos gruppierten Artikel 6 erzeugt werden können. Ebenso ist es selbstverständlich, dass über das Einlaufband 3 mehrere Artikel unterschiedlichen Typs einlaufen können. Somit kann mit der Vorrichtung 1 zum geordneten Zusammenstellen von Artikeln Gruppen gebildet werden, die aus mehreren Artikeltypen bestehen. Ebenso ist es möglich, dass einer bereits auf dem Auslaufband 9 angeordneten Gruppe aus behälterlos gruppierten Artikeln 6 ein Zupackartikel beigefügt wird. Der Variabilität der Vorrichtung 1 zum geordneten Zusammenstellen von Artikeln sind somit keine Grenzen gesetzt. Durch die Bildverarbeitungseinrichtung bzw. Detektoreinrichtung können die unterschiedlichen Artikel, welche über das Einlaufband 3 einlaufen, erfasst werden und die Gruppiereinrichtung 7 kann je nach Bedarf den entsprechenden Artikel ergreifen und diesen und andere Artikel auf dem Auslaufband nach einem beliebig, benutzerdefinierten Muster, auf dem Auslaufband abstellen.

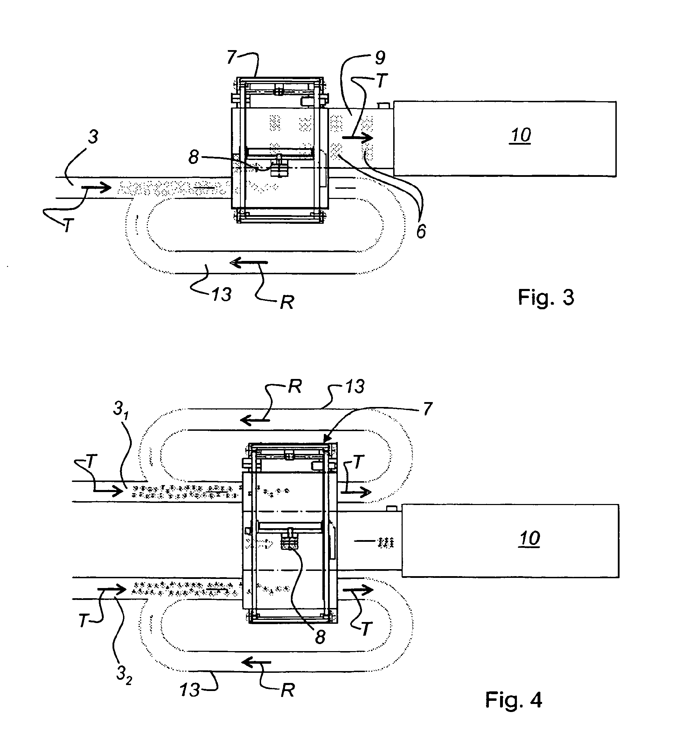

Figur 3 zeigt eine weitere Ausführungsform der Vorrichtung zum geordneten Zusammenstellen von Artikeln. Bei dieser Ausführungsform werden die behälterlos auf dem Auslaufband 9 gruppierten Artikeln in mehreren nebeneinander angeordneten Gruppen zusammengestellt. Diese Gruppen laufen mit dem Auslaufband 9 in die Verpackungseinrichtung 10 ein und werden dort zu den einzelnen festen Gebinden zusammengestellt. Die Gruppiereinrichtung 7 übergreift dabei das Einlaufband 3 und das Auslaufband 9. Mit dem Greifkopf 8 der Gruppiereinrichtung 7 werden die über das Einlaufband 3 in Transportrichtung T einlaufenden losen und ungruppierten Artikel 5 auf das Auslaufband 9 in der in Figur 3 gezeigten gruppierten Formation umgesetzt. Bei dem Umsetzen läuft das Auslaufband 9 erfindungsgemäß kontinuierlich in Transportrichtung T. Ebenso läuft das Einlaufband 3 ebenfalls in Transportrichtung T. Das Einlaufband 3 und das Auslaufband 9 werden erfindungsgemäß unabhängig voneinander gesteuert. Ferner ist das Einlaufband 3 mit einem Rücklauf 13 versehen, der in einer Rücktransportrichtung R die nicht mit der Gruppiereinrichtung 7 verarbeiteten Artikel wieder dem Einlaufband 3 vor der Gruppiereinrichtung 7 zuführt. Ferner ist es denkbar, dass eine weitere Gruppiereinrichtung 7 vorgesehen ist, die auf das Auslaufband 9 Unterlagen (hier nicht dargestellt) derart ablegt, dass nebeneinander mehrere Gruppen aus geordneten Artikeln auf den Unterlagen zusammengestellt werden können. In der dem Auslaufband 9 nachgeschalteten Verpackungseinrichtung 10 werden die Unterlagen gefaltet und/oder verklebt, so dass parallel mindestens zwei fertige Gebinde entstehen.

Figur 4 zeigt eine weitere Ausführungsform der Vorrichtung 1 zum geordneten Zusammenstellen von Artikeln. In der hier gezeigten Ausführungsform sind ein erstes Einlaufband 3₁ und ein zweites Einlaufband 3₂ vorgesehen. Über das erste Einlaufband 3₁ und das zweite Einlaufband 3₂ werden die losen ungruppierten Artikel 5 der Gruppiereinrichtung 7 zugeführt. Wie in der Figur 4 zu erkennen ist, übergreift die Gruppiereinrichtung 7 das erste Einlaufband 3₁, das zweite Einlaufband 3₂ und das Auslaufband 9. Auf dem Auslaufband 9 werden mit der Gruppiereinrichtung 7 die behälterlos gruppierten Artikel 6 auf dem Auslaufband 9 gruppiert. Die in Figur 4 gezeigte Ausführungsform hat den Vorteil, dass über das erste Einlaufband 3₁ und das zweite Einlaufband 3₂ jeweils unterschiedliche Artikeltypen der Gruppiereinrichtung 7 zugeführt werden können. Die unterschiedlichen Artikeltypen kommen von Produktionseinrichtungen, die jeweils unterschiedliche Artikel herstellen. Mit der Gruppiereinrichtung 7 können dann die Artikel zu Gruppen zusammengestellt werden, die aus unterschiedlichen Artikeltypen bestehen. Somit kann man auf einfache Weise behälterlos gruppierte Artikel zu Gruppen zusammenstellen, die aus unterschiedlichen Artikeltypen bestehen.

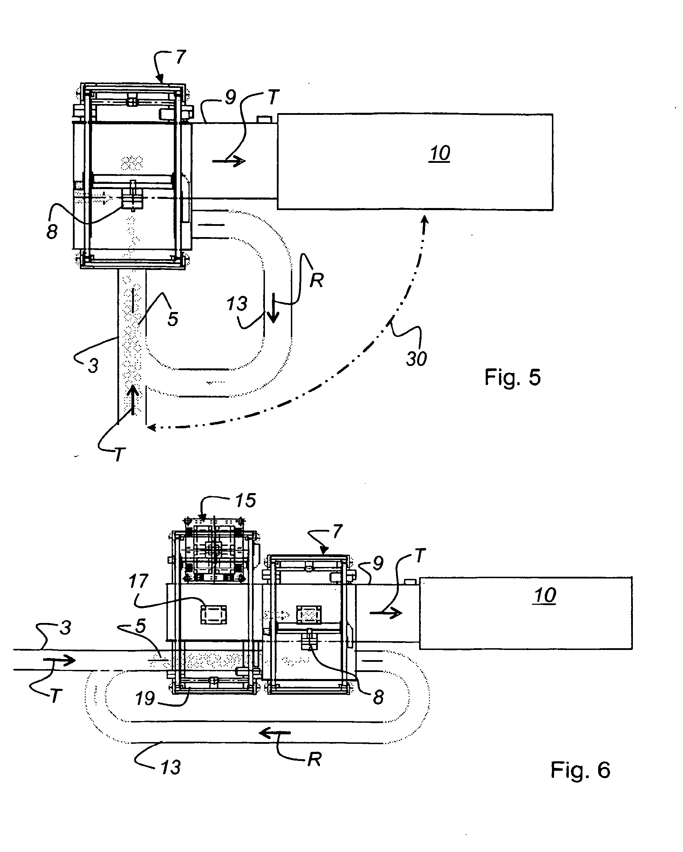

Figur 5 zeigt eine weitere Ausführungsform der Vorrichtung zum Zusammenstellen von Artikeln zu Artikelgruppen. Das Einlaufband 3 ist hier unter einem Winkel 30 zum Auslaufband 9 angeordnet. Bevorzugter Weise ist der Winkel 30 ein rechter Winkel. Die in Figur 5 gezeigte Ausführungsform zeigt die Variabilität der gegenwärtigen Erfindung. Je nach den räumlichen Bedingungen, die beim Nutzer der erfindungsgemäßen Vorrichtung 1 vorliegen, kann man das Einlaufband 3, die Gruppiereinrichtung 7 und das Auslaufband 9 in gewünschter Weise anordnen, so dass die behälterlos gruppierten Artikel einer Verpackungseinrichtung zugeführt werden. Es ist selbstverständlich, dass hier die Transportrichtung T des Einlaufbandes 3 im rechten Winkel zur Transportrichtung T des Auslaufbandes 9 ist. Ebenso ist ein Rücklauf 13 vorgesehen, der mit einer Rücklaufrichtung R überzählige, nicht mit der Greifeinrichtung 7 verarbeitete Artikel wieder dem Einlaufband 3 vor der Gruppiereinrichtung 7 zuführt.

Figur 6 zeigt eine weitere Ausführungsform der gegenwärtigen Erfindung, die sich von den Ausführungsformen der Figuren 1 bis 3 dahingehend unterscheidet, dass ein Magazin 15 für Unterlagen 17 gemäß Anspruch 1 vorgesehen ist. Die Gruppiereinrichtung 7 und das Handhabungssystem 19 für die Unterlagen 17 ist derart angeordnet, dass sowohl das Handhabungssystem 19, als auch die Gruppiereinrichtung 7 das Einlaufband 3 und das Auslaufband 9 übergreifen. Das Handhabungssystem ist der Gruppiereinrichtung 7 vorgeordnet. Das Handhabungssystem 19 entnimmt jeweils eine Unterlage 17 aus dem Magazin 15 und legt diese auf das Auslaufband 9 ab. Die Unterlagen 17 werden in Transportrichtung T zu der Gruppiereinrichtung 7 bewegt. Über das Einlaufband 3 werden die losen ungruppierten Artikel 5 zu der Gruppiereinrichtung 7 transportiert. Mit dem Greifkopf 8 der Gruppiereinrichtung 7 werden die Artikel geordnet, aber behälterlos auf der Unterlage 17 abgestellt. Die Vorrichtung ist derart variabel ausgestaltet, dass es unerheblich ist, an welchem Ort sich die Unterlage 17 auf dem Auslaufband 9 befindet. Es sind Bilderkennungseinrichtungen bzw. Detektoren (nicht dargestellt) vorgesehen, die den Ort der Unterlage 17 erfassen, so dass eine entsprechende Steuerung der Gruppiereinrichtung 7 möglich ist, um die Artikel an der richtigen Position auf der Unterlage 17 des Auslaufbandes 9 abzustellen.

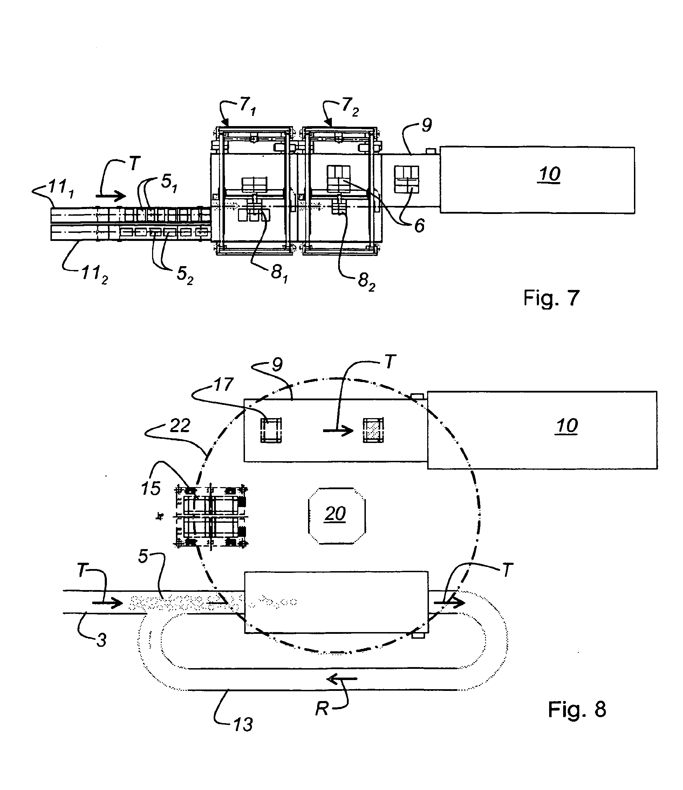

Eine weitere Ausführungsform der erfindungsgemäßen Vorrichtung ist, dass das Einlaufband 3 die losen ungruppierten Artikel 5 der mindestens einen Gruppiereinrichtung 7 geordnet in mindestens einer Gasse 11 zuführt. Das Einlaufband 3 umfasst in der in Figur 7 dargestellten Ausführungsform eine erste Gasse 11₁ und eine zweite Gasse 11₂. Über die erste Gasse 11₁ laufen die Artikel 5₁ in einer ersten Orientierung ein. Über die zweite Gasse 11₂ laufen die Artikel 5₂ entsprechend einer zweiten Orientierung ein. Zum Umsetzen der Artikel 5₁ bzw. 5₂ ist eine erste Gruppiereinrichtung 7₁ und eine zweite Gruppiereinrichtung 7₂ vorgesehen. Die Arbeitsweise der einzelnen Gruppiervorrichtungen 7₁ und 7₂ ist derart ausgebildet, dass der erste Greifkopf 8₁ der ersten Gruppiereinrichtung 7₁ die Artikel ergreift, welche der ersten Gasse 11₁ der ersten Gruppiereinrichtung 7₁ zugeführt werden. Die zweite Gruppiereinrichtung 7₂ ergreift mit dem Greifkopf 8₂ die Artikel, welche der zweiten Gruppiereinrichtung 7₂ über die zweite Gasse 11₂ zugeführt werden. Die beiden Gruppiereinrichtungen 7₁ und 7₂ erstellen auf dem Auslaufband 9 eine geordnete Anordnung der Artikel, welche letztendlich über das Auslaufband 9 der Verpackungseinrichtung 10 zugeführt werden. Das Muster, nach dem die Lage bzw. Gruppe aus geordneten Artikeln 6 erstellt wird, kann in beliebiger Weise durch den Benutzer der Vorrichtung gestaltet werden. Dies ist möglich, ohne eine Umbaumaßnahme an den Vorrichtungen vornehmen zu müssen.

Figur 8 zeigt eine weitere Ausführungsform der Vorrichtung zum behälterlosen Zusammenstellen von Artikeln. Die Vorrichtung besitzt ebenfalls ein Einlaufband 3, über das die ungeordneten Artikel 5 entlang einer Transportrichtung T einen Arbeitsbereich 22 eines Roboters 20 zugeführt werden. Ebenso ist ein Auslaufband 9 dem Roboter 20 zugeordnet. Über das Auslaufband 9 werden in Transportrichtung T die auf dem Auslaufband 9 behälterlos gruppierten Artikel 6 der Verpackungseinrichtung 10 zugeführt. Obwohl in der in Figur 8 gezeigten Darstellung die Transportrichtung T des Einlaufbandes 3 und die Transportrichtung T des Auslaufbandes 9 gleichgerichtet und parallel sind, soll dies nicht als eine Beschränkung der Erfindung aufgefasst werden. Es ist für einen Fachmann selbstverständlich, dass das Einlaufband 3 und das Auslaufband 9 in beliebiger Art und Weise angeordnet werden können. Es ist dabei lediglich erforderlich, dass das Einlaufband 3 und das Auslaufband 9 im Arbeitsbereich des jeweiligen Roboters 20 sind, der die Artikel vom Einlaufband 3 auf das Auslaufband 9 umsetzt. In der hier gezeigten Ausführungsform ist im Arbeitsbereich 22 des Roboters 20 ebenfalls ein Magazin 15 für Unterlagen 17 vorgesehen. Der Roboter 20 entnimmt dabei jeweils eine Unterlage 17 aus dem Magazin 15 und setzt diese auf dem Auslaufband 9 ab. Anschließend wird der Roboter 20 die Artikel in entsprechender Weise auf der Unterlage 17 auf dem Auslaufband 9 gruppieren. Anschließend werden die auf der Unterlage behälterlos gruppierten Artikel 6 der Verpackungseinrichtung 10 zugeführt und dort zu einem Gebinde fest zusammengefasst.

Die in Figur 1 bis 8 gezeigten Ausführungsformen der Vorrichtung 1 zum gruppierten Zusammenstellen von Artikeln zeigen lediglich eine kleine Auswahl von vielen Anordnungsmöglichkeiten des Einlaufbandes 3, des Auslaufbandes 9 und der Gruppiereinrichtung 7. Falls Unterlagen für die behälterlose Gruppierung der Artikel auf den Unterlagen 17 auf dem Auslaufband 9 notwendig sind, kann ebenfalls ein Magazin 15 vorgesehen sein, das ebenfalls im Zugriffbereich der Gruppiereinrichtung 7 oder des Roboters 20 angeordnet ist. Die Zuführung von Unterlagen (Kartonagen, Kunststoff oder anderen geeigneten Materialien) erfolgt meist über eine Speichervorrichtung, welche außen oder unterhalb der Vorrichtung 1 angedockt ist. Bei besagtem Bedarf werden dann einzelne Zuschnitte mittels des Greifkopfs 8 der Gruppiereinrichtung 7 bzw. des Roboters 20 oder aus dem Magazin 15 entnommen und auf das Auslaufband 9 gelegt. Die gegenwärtige Erfindung bietet erhebliche Vorteile gegenüber dem Stand der Technik und erzielt somit eine erheblich höhere Effizienz einer Verpackungsmaschine, welche der Vorrichtung zum Zusammenstellen von Artikeln nachgeordnet ist.

Gemäß dem Stand der Technik erfolgt die Zuführung von Produkten, wie z. B. Getränkebehälter, welche im Massenstrom zugeführt werden, innerhalb einzelner Gassen, welche durch Führungsbleche voneinander getrennt sind. Das Problem dabei ist, dass die Produkte sich sehr leicht gegeneinander beim Verjüngen durch die Führungsbleche verkeilen. Bei dieser Art von Störung ist meist ein Bedienpersonal notwendig, um die Verkeilung zu lösen und den Produktstrom wieder fortzusetzen. Ebenso erfordert die Verwendung von Führungsblechen, dass diese bei der Verarbeitung von Produkten unterschiedlicher Abmessung verstellt werden müssen, was zu einer Stillstandzeit der Verpackungsmaschine führt. Mit der Erfindung ist es möglich, einer Verpackungseinrichtung 10 Produkte, Kartonagen und andere geeignete Gegenstände definiert und formiert zuzuführen. Die Vorrichtung zum geordneten Zusammenstellen der Artikel umfasst modulare Einheiten (das Einlaufband 3, das Auslaufband 9 und die Gruppiereinrichtungen 7). Die Gruppiereinrichtungen 7 bzw. Roboter 20 gruppieren die Artikel behälterlos auf dem Auslaufband 9. Somit ist es möglich, Produkte und andere geeignete Mittel vor der eigentlichen Verpackungseinrichtung 10 definiert und formiert abzusetzen und somit der Verpackungseinrichtung 10 diese bereits formiert zuzuführen. Diese modularen Einheiten werden an die Verpackungseinrichtung 10 angebracht, wobei das Einlaufband 3 und das Auslaufband 9 z. B. ein Förderband, eine Mattenkette, oder ähnlich bekannte Fördermittel sein können. Die Gruppiereinrichtung 7 kann ein Roboter sein, welcher mit einem Greiforgan ausgestattet ist. Der Roboter 20 kann wahlweise als Portalroboter ausgeführt sein und somit in das Einlaufband 3 und das Auslaufband 9 integriert werden. Ebenso ist ein freistehender Roboter 20 denkbar (siehe Figur 8). Die Artikel oder Unterlagen (Kartonagen) werden mittels des Greifkopfes 8 erfasst und definiert und formiert auf dem Auslaufband der Vorrichtung 1 abgesetzt. Über das Auslaufband 9 werden die so geordneten Artikel der Verpackungseinrichtung 10 zugeführt.

Die Erfindung wurde in Bezug auf eine bevorzugte Ausführungsform der Erfindung beschrieben. Es ist dennoch denkbar, dass Abwandlungen und Änderungen gemacht werden können, ohne den Schutzbereich der nachstehenden Ansprüche zu verlassen.

## Patentansprüche

1. Vorrichtung (1) zum geordneten Zusammenstellen von Artikeln mit
mindestens einem Einlaufband (3, 3₁, 3₂) für lose, ungruppierte Artikel (5),
mindestens einer Gruppiereinrichtung (7, 20) für die losen, ungruppierten Artikel (5), die durch die mindestens eine Gruppiereinrichtung (7, 20) umsetzbar sind, und
einem Handhabungssystem (19) oder mindestens einem Roboter (20) mit jeweils einem Zugriffbereich,
wobei ein Auslaufband (9) der mindestens einen Gruppiereinrichtung (7, 20) zugeordnet ist, das die auf dem Auslaufband (9) behälterlos gruppierten Artikel (6) einer Verpackungseinrichtung (10) zuführt,
**gekennzeichnet durch**
mindestens ein Magazin (15) für Unterlagen (17), das im Zugriffbereich der mindestens einen Gruppiereinrichtung (7) oder des mindestens einen Roboters (20) angeordnet ist, so dass **durch** das Handhabungssystem (19) oder den mindestens einen Roboter (20) mindestens eine Unterlage (17) aus dem Magazin (15) entnehmbar und auf dem Auslaufband (9) absetzbar ist und die Artikel (5) auf der Unterlage (17) gruppierbar sind,
wobei das Auslaufband (9) während des Umsetzens kontinuierlich läuft und
das mindestens eine Einlaufband (3, 3₁, 3₂) und das Auslaufband (9) unabhängig voneinander steuerbar sind.

2. Vorrichtung nach Anspruch 1, wobei das mindestens eine Einlaufband (3, 3₁, 3₂) und das Auslaufband (9) eine gleichgerichtete Transportrichtung (T) aufweisen.

3. Vorrichtung nach Anspruch 1, wobei das mindestens eine Einlaufband (3) unter einem Winkel zum Auslaufband (9) angeordnet ist, beispielsweise unter einem rechten Winkel.

4. Vorrichtung nach einem der Ansprüche 1 bis 3, wobei das mindestens eine Einlaufband (3, 3₁, 3₂) mindestens eine Gasse (11) umfasst, über die die losen, ungruppierten Artikel (5) der Gruppiereinrichtung (7) geordnet zuführbar sind.

5. Vorrichtung nach einem der voranstehenden Ansprüche, wobei das mindestens eine Einlaufband (3, 3₁, 3₂) mit einem Rücklauf (13) versehen ist, durch den nicht an das Auslaufband (9) übergebene Artikel (5) erneut dem mindestens einen Einlaufband (3, 3₁, 3₂) vor der Gruppiereinrichtung (7) zuführbar sind.

6. Vorrichtung nach einem der voranstehenden Ansprüche mit einer Speichervorrichtung für Unterlagen, die außen oder unterhalb der Vorrichtung (1) angedockt ist.

7. Vorrichtung nach einem der Ansprüche 1 bis 6, wobei die Gruppiereinrichtung (7) bzw. das Handhabungssystem (19) mindestens ein Portalroboter ist, wobei der Portalroboter das mindestens eine Einlaufband (3, 3₁, 3₂) und das Auslaufband (9) übergreift.

8. Vorrichtung nach Anspruch 7, wobei das Magazin (15) über dem Handhabungssystem (19) angeordnet ist.

9. Vorrichtung nach einem der Ansprüche 1 bis 6, wobei die Gruppiereinrichtung (7) bzw. das Handhabungssystem (19) der mindestens eine Roboter (20) ist, wobei das mindestens eine Einlaufband (3, 3₁, 3₂) und das Auslaufband (9) in einem Arbeitsbereich (22) des Roboters (20) angeordnet sind.

10. Vorrichtung nach einem der voranstehenden Ansprüche, wobei die Greifeinrichtung (7) eine Bilderfassungseinrichtung oder Detektoreinrichtung (4) besitzt, mit der die Anzahl und der Ort der einlaufenden ungruppierten Artikel (5) auf dem mindestens einen Einlaufband (3, 3₁, 3₂) erfassbar und/oder die Gruppierung der Artikel (5) auf dem Auslaufband (9) überwachbar sind.

11. Vorrichtung nach Anspruch 10, wobei die Bilderfassungseinrichtung oder Detektoreinrichtung (4) mit einer Auswerte- und Steuereinrichtung (12) verbunden ist, wobei mit der Auswerte- und Steuereinrichtung (12) die Geschwindigkeit des mindestens einen Einlaufbandes (3, 3₁, 3₂) und des Auslaufbandes (9) regelbar und ein Greifkopf (8) der Gruppiereinrichtung (7) steuerbar sind, um die Artikel (5) auf dem mindestens einen Einlaufband (3, 3₁, 3₂) zu erfassen und diese an den dafür vorgesehenen Ort auf dem Auslaufband (9) abzusetzen.

12. Vorrichtung nach einem der voranstehenden Ansprüche, wobei das Auslaufband (9) beim Umsetzen der Artikel (5) von dem mindestens einen Einlaufband (3) auf das Auslaufband (9) kontinuierlich in einer Transportrichtung (T) bewegbar ist, und/oder das mindestens eine Einlaufband (3) und das Auslaufband (9) unabhängig voneinander steuerbar sind.

13. Verfahren zum geordneten Zusammenstellen von Artikeln (5) mit den folgenden Schritten:
• Zuführen von losen, ungruppierten Artikeln (5) mit mindestens einem Einlaufband (3, 3₁, 3₂) zu mindestens einer Gruppiereinrichtung (7);
• Zuführen von behälterlos gruppierten Artikeln (6) über das Auslaufband (9) zu einer Verpackungseinrichtung (10);
**gekennzeichnet durch die folgenden Schritte:**
• Entnehmen mindestens einer Unterlage (17) aus mindestens einem Magazin (15) für die Unterlagen (17) **durch** ein Handhabungssystem (19) oder mindestens einen Roboter (20);
• Absetzen der mindestens einen Unterlage (17) auf dem Auslaufband (9); und
• Gruppieren der Artikel (5) auf der mindestens einen Unterlage (17) mittels der Gruppiereinrichtung (7), wobei das Auslaufband während des Umsetzens Kontinuierlich läuft und das mindestens eine Einlaufband und das Auslaufband unabhängig voneinander gesteuert werden

14. Verfahren nach Anspruch 13, wobei die losen, ungruppierten Artikel (5) über das mindestens eine Einlaufband (3, 3₁, 3₂) der Gruppiereinrichtung (7) ungeordnet zugeführt werden.

15. Verwendung des Verfahrens nach einem der Ansprüche 13 bis 14 zur Erstellung eines Gebindes aus mehreren ungeordneten Artikeln (5), wobei lose und behälterlos gruppierte Artikel (6) einer Verpackungseinrichtung (10) zugeführt werden, die aus den behälterlos und geordnet zusammengestellten Artikeln (6) das Gebinde produziert.

## Claims

1. Apparatus (1) for the ordered composition of articles, comprising
at least one infeed conveyor (3, 3₁, 3₂) for loose, un-grouped articles (5),
at least one grouping device (7, 20) for the loose, un-grouped articles (5) that can be repositioned by the at least one grouping device (7, 20), and
a handling system (19) or at least one robot (20) with one access area each,
wherein one discharge conveyor (9) is assigned to the at least one grouping device (7, 20), which feeds the articles grouped without containers (6) on the discharge conveyor (9) to a packaging device (10),
**characterized by**
at least one magazine (15) for support pads (17) that is disposed in the access area of the at least one grouping device (7) or the at least one robot (20), so that by means of the handling system (19) or the at least one robot (20) at least one support pad (17) can be removed from the magazine (15) and placed onto the discharge conveyor (9) and the articles (5) can be grouped on the support pad (17),
wherein the discharge conveyor (9) runs continously during repositioning and the at least one infeed conveyor (3, 3₁, 3₂) and the discharge conveyor (9) can be controlled independently of one another.

2. Apparatus according to claim 1, wherein the at least one infeed conveyor (3, 3₁, 3₂) and the discharge conveyor (9) exhibit an identical direction of transport (T).

3. Apparatus according to claim 1, wherein the at least one infeed conveyor (3) is disposed at an angle to the discharge conveyor (9), for example at a right angle.

4. Apparatus according to one of the claims 1 to 3, wherein the at least one infeed conveyor (3, 3₁, 3₂) comprises at least one lane (11), via which the loose, un-grouped articles (5) can be fed to the grouping device (7) in an ordered fashion.

5. Apparatus according to one of the aforementioned claims, wherein the at least one infeed conveyor (3, 3₁, 3₂) is provided with a return line (13), via which articles (5) not passed unto the discharge conveyor (9) can again be fed to an infeed conveyor (3, 3₁, 3₂) upstream of the grouping device (7).

6. Apparatus according to one of the aforementioned claims, comprising a storage device for support pads, that is docked on the outside or underneath the apparatus (1).

7. Apparatus according to one of the claims 1 to 6, wherein the grouping device (7) or the handling system (19) is at least one gantry robot, wherein the gantry robot spans the at least one infeed conveyor (3, 3₁, 3₂) and the discharge conveyor (9).

8. Apparatus according to claim 7, wherein the magazine (15) is disposed above the handling system (19).

9. Apparatus according to one of the claims 1 to 6, wherein the grouping device (7) or the handling system (19) is at least one robot (20), wherein the at least one infeed conveyor (3, 3₁, 3₂) and the discharge conveyor (9) are disposed in an operating range (22) of the robot (20).

10. Apparatus according to one of the aforementioned claims, wherein the gripper unit (7) is equipped with an image acquisition unit or a detection unit (4), with which the count and the position of the incoming un-grouped articles (5) on the at least one infeed conveyor (3, 3₁, 3₂) can be detected and/or the grouping of the articles (5) on the discharge conveyor (9) can be monitored.

11. Apparatus according to claim 10, wherein the image acquisition unit or detection unit (4) is connected to an evaluation and control unit (12), wherein the speed of the at least one infeed conveyor (3, 3₁, 3₂) and the discharge conveyor (9) can be adjusted and a gripper head (8) of the grouping device (7) can be controlled by the evaluation and control unit (12), to grasp the articles (5) on the at least one infeed conveyor (3, 3₁ 3₂) and set them down at the intended position on the discharge conveyor (9).

12. Apparatus according to one of the aforementioned claims, wherein the discharge conveyor (9) is continuously moveable in a direction of transport (T) during repositioning of the articles (5) from the at least one infeed conveyor (3) unto the discharge conveyor (9) and/or the at least one infeed conveyor (3) and the discharge conveyor (9) can be controlled independently of one another.

13. Method for the ordered composition of articles (5), comprising the following steps:
• feeding of loose, un-grouped articles (5) to at least one grouping device (7) by at least one infeed conveyor (3, 3₁, 3₂);
• feeding of articles grouped without containers (6) to a packaging device (10) via the discharge conveyor (9);
**characterized by the following steps:**
• removing of at least one support pad (17) out of at least one magazine (15) for the support pads (17) by a handling system (19) or at least one robot (20);
• placing of the at least one support pad (17) unto the discharge conveyor (9) and
• grouping of the articles (5) on the at least one support pad (17) by means of the grouping device (7), wherein the discharge conveyor runs continuously during repositioning and the at least one infeed conveyor (3, 3₁, 3₂) and the discharge conveyor (9) are controlled independently of one another.

14. Method according to claim 13, wherein the loose, un-grouped articles (5) are fed unordered to the grouping device (7) by the at least one infeed conveyor (3, 3₁, 3₂).

15. Application of the method according to one of the claims 13 to 14 for the creation of a package consisting of multiple unordered articles (5), wherein loose and containerless grouped articles (6) are fed to a packaging device (10), which produces the package out of the containerless and orderly arranged articles (6).

## Revendications

1. Dispositif (1) pour le rassemblement organisé d'articles avec
au moins un tapis de chargement (3, 3₁, 3₂) pour des articles en vrac et non groupés (5),
au moins un dispositif de groupage (7, 20) pour les articles en vrac, non groupés (5) qui peuvent être maniés par au moins un dispositif de groupage (7, 20) et
un système de manipulation (19) ou au moins un robot (20) avec respectivement une zone d'accès ,
un tapis de sortie (9) assigné au dispositif de groupage (7, 20) au moins au nombre d'un qui conduit les articles groupés sans réservoir (6) sur le tapis de sortie (9) à un dispositif de conditionnement (10),
**caractérisé par**
au moins un magasin (15) pour des supports (17) qui est situé dans la zone d'accès du dispositif de groupage (7) au moins au nombre d'un ou du robot (20) au moins au nombre d'un, de telle sorte que par le système de manipulation (19) ou par le robot (20) au moins au nombre d'un, au moins un support (17) peut être retiré du magasin (15) ou peut être déposé sur le tapis de sortie (9) et de telle sorte que les articles (5) peuvent être groupés sur le support (17),
le tapis de sortie (9) marchant en continu pendant le repositionnement et le tapis de chargement (3, 3₁, 3₂) au moins au nombre d'un et le tapis de sortie (9) pouvant être commandés indépendamment l'un de l'autre.

2. Dispositif selon la revendication 1, le tapis de chargement (3, 3₁, 3₂) au moins au nombre d'un et le tapis de sortie (9) étant orientés dans une même direction de transport (T).

3. Dispositif selon la revendication 1, le tapis de chargement (3) au moins au nombre d'un étant situé selon un angle par rapport au tapis de sortie (9), par exemple selon un angle droit.

4. Dispositif selon l'une des revendications 1 à 3, le tapis de chargement (3, 3₁, 3₂) au moins au nombre d'un entourant au moins un fossé (11) grâce auquel les articles non groupés (5) peuvent être conduits au dispositif de groupage (7) de manière ordonnée.

5. Dispositif selon l'une des revendications précédentes, le tapis de chargement (3, 3₁, 3₂) au moins au nombre d'un étant pourvu d'un retour (13) à travers lequel les articles (5) non remis au tapis de sortie (9) peuvent être reconduits à nouveau au tapis de chargement (3, 3₁, 3₂) au moins au nombre devant le dispositif de groupage (7).

6. Dispositif selon l'une des revendications précédentes avec un dispositif d'accumulation pour les supports qui est fixé en dehors ou sous le dispositif (1).

7. Dispositif selon l'une des revendications 1 à 6, le dispositif de groupage (7) et le système de manipulation (19) étant au moins un robot portique, le robot portique empiétant sur le tapis de chargement (3, 3₁, 3₂) au moins au nombre d'un et sur le tapis de sortie (9).

8. Dispositif selon la revendication 7, le magasin (15) étant situé au-dessus du système de manipulation (19).

9. Dispositif selon l'une des revendications 1 à 6, le dispositif de groupage (7) et le système de manipulation (19) étant le robot (20) au moins au nombre d'un, le tapis de chargement (3, 3₁, 3₂) au moins au nombre d'un et le tapis de sortie (9) étant situés dans un espace de travail (22) du robot (20).

10. Dispositif selon l'une des revendications précédentes, le dispositif de préhension (7) possédant un dispositif d'enregistrement d'images ou un dispositif de détection (4), avec lequel le nombre et l'emplacement des articles non groupés chargés (5) sur le tapis de chargement (3, 3₁, 3₂) au moins au nombre d'un peuvent être enregistrés et/ou le groupement des articles (5) peut être surveillé sur le tapis de sortie (9).

11. Dispositif selon la revendication 10, le dispositif d'enregistrement d'images ou le dispositif de détection (4) étant relié à un dispositif d'évaluation et de commande (12), le dispositif d'évaluation et de commande (12) permettant de régler la vitesse du tapis de chargement (3, 3₁, 3₂) au moins au nombre d'un et du tapis de sortie (9) et permettant de commander une tête de préhension (8) du dispositif de groupage (7) afin d'enregistrer les articles (5) sur le tapis de chargement (3, 3₁, 3₂) au moins au nombre d'un et de déposer ceux-ci à l'emplacement prévu à cet effet sur le tapis de sortie (9).

12. Dispositif selon l'une des revendications précédentes, le tapis de sortie (9) étant mobile lors du passage des articles (5) du tapis de chargement (3) au moins au nombre d'un au tapis de sortie (9) en continu dans une direction de transport (T) et/ou le tapis de chargement (3) au moins au nombre d'un et le tapis de sortie (9) pouvant être commandés indépendamment l'un de l'autre.

13. Procédé de rassemblement ordonné d'articles (5) avec les étapes suivantes :
• guidage d'articles en vrac et non groupés (5) avec au moins un tapis de chargement (3, 3₁, 3₂) vers au moins un dispositif de groupage (7) ;
• guidage d'articles groupés sans réservoir (6) via le tapis de sortie (9) vers un dispositif de conditionnement (10) ;
**caractérisé par les étapes suivantes :**
• retrait d'au moins un support (17) à partir d'au moins un magasin (15) pour les supports (17) par un système de manipulation (19) ou au moins un robot (20) ;
• dépôt du support (17) au moins au nombre d'un sur le tapis de sortie (9) et
• groupement des articles (5) sur le support (17) au moins au nombre d'un à l'aide du dispositif de groupage (7), le tapis de sortie fonctionnant en continu pendant le repositionnement et le tapis de chargement au moins au nombre d'un et le tapis de sortie étant commandés indépendamment l'un de l'autre.

14. Procédé selon la revendication 13, les articles en vrac, non groupés (5) étant guidés via le tapis de chargement (3, 3₁, 3₂) au moins au nombre d'un vers le dispositif de guidage (7) sans être ordonnés.

15. Utilisation du procédé selon l'une des revendications 13 à 14 de réalisation d'un emballage à partir de plusieurs articles non ordonnés (5), les articles en vrac et groupés sans réservoir (6) étant guidés vers un dispositif de conditionnement (10) qui produit l'emballage à partir des articles sans réservoir et rassemblés de manière ordonnée (6).
